# EUROPEAN PATENT SPECIFICATION

(11) **EP 3 590 333 B1**
(45) Date of publication and mention of the grant of the patent: **06.10.2021**
(21) Application number: 19190470.5
(22) Date of filing: 30.08.2013
(51) Int. Cl.: A01N 25/02, A01N 25/30, A01N 39/02, A01N 39/04, A01N 43/40, A01N 57/20

(54) **COMPOSITIONS AND METHODS FOR IMPROVING THE COMPATIBILITY OF WATER SOLUBLE HERBICIDE SALTS**
ZUSAMMENSETZUNGEN UND VERFAHREN ZUR ERHÖHUNG DER VEREINBARKEIT WASSERLÖSLICHER HERBIZIDSALZE
COMPOSITIONS ET PROCÉDÉS POUR AMÉLIORER LA COMPATIBILITÉ DE SELS D'HERBICIDE SOLUBLES DANS L'EAU

(30) Priority: 04.09.2012 US 201261696351 P
(43) Date of publication of application: 08.01.2020
(62) Divisional of application: 13835652.2
(73) Proprietor: Dow AgroSciences LLC, Indianapolis, IN 46268 (US)
(72) Inventor: ECKELBARGER, Joseph D., Carmel, IN 46240 (US); EPP, Jeffrey B., Noblesville, IN 46062 (US); FIELDS, Stephen Craig, Indianapolis, IN 46240 (US); HORTY, Lindsey G., Indianapolis, IN 46217 (US); GIAMPIETRO, Natalie C., Carmel, IN 46074 (US); GUENTHENSPBERGER, Katherine A., Daleville, IN 47334 (US); LOWE, Christian T., Westfield, IN 46074 (US); PETKUS, Jeff, Indianapolis, IN 46236-9036 (US); ROTH, Joshua, Carmel, IN 46074 (US); SATCHIVI, Norbert M., Carmel, IN 46074 (US); SCHMITZER, Paul R., Indianapolis, IN 46250 (US); SIDDALL, Thomas L., Zionsville, IN 46077 (US); WANG, Nick X., Carmel, IN 46074 (US)
(74) Representative: f & e patent

(56) References cited:
- EP-A2- 0 299 654
- WO-A1-00/38523
- WO-A1-2004/093546
- WO-A1-2008/069826
- WO-A1-2010/100424
- WO-A1-2010/102102
- WO-A2-02/102153
- WO-A2-2010/036996
- WO-A2-2010/068746
- US-A- 4 797 157
- US-A- 5 877 112
- US-A1- 2004 077 499
- US-A1- 2006 040 826
- US-A1- 2008 194 408
- US-A1- 2011 210 028
- US-A1- 2012 040 834
- US-A1- 2012 053 056
- US-B1- 6 228 807
- "Preparation and Characterisation of Glyphosate Salts - physical characteristics such as solubility of glyphosate salt solutions at various temperatures, density and compatibility with additives such as adjuvants via cloud point measurements", IP.COM JOURNAL, IP.COM INC., WEST HENRIETTA, NY, US, 17 January 2006 (2006-01-17), XP013112472, ISSN: 1533-0001

## Description

### BACKGROUND

Aqueous concentrate formulations of pesticidal and plant growth modifying chemicals are widely used in agricultural, industrial, recreational, and residential areas worldwide. The active ingredients of such concentrates frequently contain acid functional groups such as carboxylic or phosphonic acids, more commonly in the form of their water soluble salts. An aqueous concentrate is essentially a solution of the active ingredient in water at relatively high concentration, intended for dilution in water prior to application by spraying or other means. Typically the aqueous concentrate is diluted in about 10 to about 500 times its own volume of water prior to application.

In today's agrochemical market with the continued demand for improved productivity it is increasingly common to combine more than one formulated product in a spray tank in order to achieve the optimal spectrum of control, efficacy, and delivery efficiency of the products. In doing this, however, spray tank incompatibilities between products can occur when components of a spray tank mixture or solution chemically or physically interact to cause an adverse effect on the stability, homogeneity, or other properties of the spray tank mixture that would reduce the effectiveness of the spray applied product. The incompatibility of a spray tank mixture or solution may physically manifest itself through the formation of crystalline precipitates, surface scum, oily droplets, gels, excessive foam or clumps of solid matter, and may result in clogged spray nozzles or screens.

Compatible aqueous pesticide mixtures or solutions are defined as those mixtures or solutions that, when formed by the combination or mixing of one or more pesticide products and/or other commonly used ingredients, result in a homogeneous liquid with little or no solids precipitation or phase separation and the retention of their full biological efficacy.

WO 2008/069826 A1 describes compatibility agents for herbicidal formulations comprising salts of 2,4-(dichlorophenoxy)acetic acid. US 4,797,157 relates to amine salts of lignosulfonates and discloses an aqueous solution comprising 2,4-(dichlorophenoxy)acetic acid dimethyl amine salt and dimethyl amine lignosulfonate.

### SUMMARY

Methods are described for improving the spray tank compatibility of aqueous herbicide solutions as defined in attached claim 1.

Further, aqueous herbicide solutions of improved spray tank compatibility as defined in attached claim 8 also are provided.

### DETAILED DESCRIPTION

Aqueous herbicide solutions containing a water soluble salt of an aryloxyalkanoic acid, a water soluble salt of a pyridyloxyalkanoic acid, and/or a water soluble salt of a heteroarylcarboxylic acid, optionally glyphosate, and one or more surface active compatibilizers and methods of creating such solutions are provided, which are defined in the attached claims. The aqueous herbicide solutions described herein have improved spray tank compatibility over previously known aqueous herbicide solutions containing water soluble salts of aryloxyalkanoic acids, water soluble salts of pyridyloxyalkanoic acids, and/or water soluble salts of glyphosate that do not contain the surface active compatibilizers described herein. The surface active compatibilizers described herein maintain the homogeneity of the described solutions by suppressing the formation of solids or phase separations. These surface active compatibilizers are especially useful when inorganic or organo ammonium cations are present and provide compatibilization without the need to raise the pH of the solution.

Aqueous solutions containing a water soluble salt of an aryloxyalkanoic acid, such as salts of 2,4-D, can have compatibility issues leading to the formation of precipitated solids under conditions where the acid equivalent (ae) concentration is about 0.3 weight percent or higher, the pH is about 6.5 or lower, and there is a sufficient concentration of inorganic cations such as, for example, K⁺, Na⁺, Ca²⁺, Mg²⁺, NH₄⁺, Fe²⁺, Fe³⁺, and the like. The exact conditions necessary for the formation of precipitated solids from these solutions of 2,4-D salts will also depend on the temperature and hardness of the water used and the actual composition and concentrations of the components in the solution. For example, a spray tank mixture made from concentrates of DMA^{®}-6 herbicide (Dow AgroSciences LLC, Indianapolis, IN; 2,4-D dimethyl ammonium salt solution with a pH value of about 7) at a rate of 800 g ae/hectare and Roundup WeatherMax^{®} herbicide (Monsanto, St. Louis, MO; glyphosate potassium salt solution with a pH value of about 4.7) at 840 g ae/hectare and a spray volume of about 47 liters/hectare would have a pH value of about 5 and will be incompatible and result in the significant formation of solids.

The common practice of adding ammonium sulfate to aqueous herbicide spray mixtures containing glyphosate to improve herbicide performance may also lead to compatibility problems. For example, if a herbicide such as 2,4-D dimethyl ammonium (DMA) is present in a spray mixture containing glyphosate to which ammonium sulfate has been added, crystallization of solids can occur if the pH and the 2,4-D concentration are in the ranges just described.

Methods and compositions for improving the spray tank compatibility of aqueous herbicide solutions containing a water soluble salt of an aryloxyalkanoic acid, a water soluble salt of a pyridyloxyalkanoic acid, and/or a water soluble salt of a heteroarylcarboxylic acid, optionally glyphosate, and further including one or more surface active compatibilizers are provided. The surface active compatibilizers in the aqueous herbicide solutions described herein include, 1) polymethacrylates grafted with polyethylene oxide side chains; 2) polyacrylates grafted with polyethylene oxide side chains; 3) polymeric amphoteric dispersants; 4) sulfonated lignins (also known as lignosulfonates) including one or more cations selected from hydrogen, ammonium, sodium and calcium, or mixtures thereof, or mixtures thereof; and mixtures of any of the surface active compatibilizers described herein. The surface active compatibilizer can be in the form of a salt such as, for example, an organic amine salt or salts containing inorganic cations. Examples of organic amine salts include organo ammonium salts. Examples of organo ammonium cations present in such salts include monomethyl ammonium, isopropyl ammonium, butyl ammonium, dimethyl ammonium, diethyl ammonium, triethyl ammonium, monoethanol ammonium, diethanol ammonium, dimethylethyl ammonium, diethylethanol ammonium, triethanol ammonium, triisopropanol ammonium, tetramethyl ammonium, tetraethyl ammonium and *N,N,N-*trimethylethanol ammonium (choline), or mixtures thereof. Examples of useful inorganic cations include, for example, ammonium, sodium, potassium, magnesium, and calcium. It is possible for the surface active compatibilizer in the form of a salt to partially be in its acid form, e.g., partially with a hydrogen cation rather than an organo amine or other cation. The surface active compatibilizer may include one or more carboxylic, sulfonic, or phosphonic acid groups attached to the polymer and these acid groups may exist in a salt form.

As used herein, the term copolymer refers to a chain-like macromolecule formed by the polymerization of two or more different monomer units in a random or block arrangement. The term grafted polymer as used herein refers to a chain-like macromolecule formed by the polymerization of a single monomer which is further reacted (grafted) with one or more chain-like molecules of different chemistry to form side chains or branches at a random or regular arrangement on the chain-like polymer backbone structure. Such grafted polymers may include ethylenically unsaturated carboxylic acid monomer units in the chain-like polymer backbone.

Suitable surface active compatibilizers for use in the methods and compositions described herein include, polymethacrylate polymers grafted with polyethylene oxide side chains such as Atlox^{®}4913 and polymeric amphoteric dispersants such as Atlox^{®} 4915 which are both available from Croda (Edison, NJ).

Surface active compatibilizers for use in the methods and compositions described herein also include sulfonated lignins, also known as lignosulfonates, which are byproducts produced in the kraft or sulfite processes used to prepare delignified wood pulp used in making paper. Suitable lignosulfonates include, but are not limited to, Borresperse NA, Borresperse CA, Ultrazine NA, Ultrazine CA, Norlig A, Norlig TSD, Ufoxane 3A, Ufoxane 2 and Marasperse AG, all of which are available from Borregaard Lignotech USA (Rothschild, WI). Especially suitable examples of these lignosulfonates include Polyfon^{®}F, H, O, and T, also Reax^{®} 83A, 85A, 907, and 910, all of which are available from MeadWestvaco (Charleston, SC), and combinations of one or more of a lignosulfonate with a sodium naphthalene sulfonate such as Kraftsperse^{®} DD-6, also available from MeadWestvaco. The sulfonated lignins described herein include one or more inorganic alkaline cations selected from hydrogen, ammonium, sodium, and calcium.

Water soluble salts of aryloxyalkanoic acids as described herein include, for example, 2,4-D ((2,4-dichlorophenoxy)acetic acid), 2,4-DB, dichloroprop, mecoprop, MCPA, and MCPB. Pyridyloxyalkanoic acids as described herein include, for example, triclopyr and fluroxypyr. The water soluble salts of the aryloxyalkanoic acids and the pyridyloxyalkanoic acids include those containing an organo ammonium cation such as, for example, monomethyl ammonium, isopropyl ammonium, butyl ammonium, dimethyl ammonium, diethyl ammonium, triethyl ammonium, monoethanol ammonium, diethanol ammonium, dimethylethyl ammonium, diethylethanol ammonium, triethanol ammonium, triisopropanol ammonium, tetramethyl ammonium, tetraethyl ammonium, and *N*,*N*,*N*-trimethylethanol ammonium (choline), or mixtures thereof. Aqueous solutions containing the water soluble salts of an aryloxyalkanoic acids or a pyridyloxyalkanoic acid may include herbicidal spray solutions or herbicide concentrates.

The methods and compositions described herein for improving the spray tank compatibility of aqueous herbicide solutions may also be used with aqueous solutions containing water soluble salts of arylcarboxylic acid and/or heteroarylcarboxylic acid herbicides such as aminopyralid, clopyralid, dicamba, picloram, and the like.

Water soluble salts of glyphosate as described herein include those salts where the cation is selected from potassium, sodium, and ammonium, also organo ammonium such as, for example, isopropyl ammonium, dimethyl ammonium, triethyl ammonium, monoethanol ammonium, diethanol ammonium, triethanol ammonium, choline, and the like, and trimethylsulfonium cation, and mixtures thereof.

The inorganic cations as described herein are those that when present in appreciable amounts or concentrations may cause aqueous solutions of the water soluble salts of an aryloxyalkanoic acid, a pyridyloxyalkanoic acid, an arylcarboxylic acid, and/or a heteroarylcarboxylic acid (optionally containing glyphosate) to become incompatible and form solids. These inorganic cations include, for example, alkali metal cations, such as sodium and potassium; alkaline earth metal cations, such as calcium and magnesium; transition metal cations, such as manganese, copper, zinc and iron; and ammonium. Aqueous solutions containing water soluble salts of 2,4-D and glyphosate at pH levels below about pH 6.5 tend to be more incompatible in the presence of appreciable concentrations of inorganic cations than are such solutions at higher pH levels.

The term appreciable concentration of inorganic cations as used herein refers to the concentration of inorganic cations present in an aqueous herbicide solution containing at least one of a soluble salt of an aryloxyalkanoic acid, a soluble salt of a pyridyloxyalkanoic acid, a soluble salt of an arylcarboxylic acid, a soluble salt of a heteroarylcarboxylic acid, and glyphosate that will lead to the precipitation of solids from that solution if all of the other conditions necessary for incompatibility of the solution exist, such as the composition and concentration of the herbicidal carboxylic acid salt present in the solution, and the temperature, hardness, and pH of the water. For example, a concentration of glyphosate potassium of about 0.8 weight percent (wt%) on an acid equivalent (ae) basis or higher in an aqueous solution at room temperature containing greater than about 0.8 wt% of 2,4-D DMA on an ae basis and made with water with a hardness of 342 parts per million (ppm) and with a final pH of about 5 will be incompatible. The compatibility of such a herbicide solution will depend, in addition to the other factors discussed herein, on the total concentration and actual composition of the inorganic cations present in the solution.

Ingredients that may contribute inorganic cations to the aqueous herbicide solutions described herein may include, but are not limited to, products or aqueous solutions containing fertilizers, micronutrients, hard water, co-formulation ingredients, and the like, as well as, water soluble salts of glyphosate containing inorganic cations such as, for example, potassium, sodium, and ammonium.

Fertilizers are optionally included in the methods and compositions described herein and may be dispersed or dissolved in water and may contain inorganic cations such as, for example, ammonium, and potassium, in sufficient amounts so as to cause incompatibility problems when mixed with an aqueous solution containing the water soluble salt of at least one of an aryloxyalkanoic acid, a pyridyloxyalkanoic acid, an arylcarboxylic acid, a heteroarylcarboxylic acid, and glyphosate. The amount of fertilizer that may be optionally included in the methods and compositions described herein is less than or equal to 30 percent, less than or equal to 28 percent, less than or equal to 26 percent, less than or equal to 24 percent, less than or equal to 22 percent, less than or equal to 20 percent, less than or equal to 18 percent, less than or equal to 16 percent, less than or equal to 14 percent, less than or equal to 13 percent, less than or equal to 12 percent, less than or equal to 11 percent, less than or equal to 10 percent, less than or equal to 9 percent, less than or equal to 8 percent, less than or equal to 7 percent, less than or equal to 6 percent, less than or equal to 5 percent, less than or equal to 4.5 percent, less than or equal to 4 percent, less than or equal to 3.5 percent, less than or equal to 3 percent, less than or equal to 2.5 percent, less than or equal to 2 percent, less than or equal to 1.5 percent, or less than or equal to 1 percent. Fertilizers may include, but are not limited to, ammonium sulfate (AMS), ammonium phosphate, ammonium nitrate, solutions of ammonium nitrate and urea which are commonly referred to in the art as 28% N or 32% N or UAN, ammonium thiosulfate, potassium nitrate, potassium phosphate, potassium chloride, potassium carbonate, and the like, and mixtures thereof. In addition to their fertilizer properties, AMS and UAN are commonly used as spray adjuvants or water conditioning agents with glyphosate herbicide treatments in order to improve biological efficacy. Thus, AMS is often mixed with glyphosate and the methods and compositions described herein can be used to improve compatibility when these solutions are combined with aqueous herbicide solutions containing a water soluble salt of an aryloxyalkanoic acid, a water soluble salt of a pyridyloxyalkanoic acid, a water soluble salt of an arylcarboxylic acid and/or a water soluble salt of a heteroarylcarboxylic acid.

Micronutrients may include one or more nutrients essential to plant growth and health that are only needed in very small quantities and may contain, among other things, one or more inorganic cations such as, for example, the cations of manganese, copper, iron, molybdenum, and zinc. Such micronutrients may be added to aqueous herbicide spray solutions containing a water soluble salt of an aryloxyalkanoic acid, a water soluble salt of a pyridyloxyalkanoic acid, a water soluble salt of an arylcarboxylic acid, a water soluble salt of a heteroarylcarboxylic acid, and/or a water soluble salt of glyphosate for economical delivery to crop plants. Compatibility problems of these aqueous herbicide spray solutions may occur if the conditions for incompatibility of these solutions exist as described herein.

Organo ammonium cations that may cause incompatibility in the aqueous herbicide solutions described herein, particularly in concentrates and pre-mix concentrates, include monomethyl ammonium, isopropyl ammonium, butyl ammonium, dimethyl ammonium, diethyl ammonium, triethyl ammonium, monoethanol ammonium, diethanol ammonium, dimethylethyl ammonium, diethylethanol ammonium, triethanol ammonium, triisopropanol ammonium, tetramethyl ammonium, tetraethyl ammonium, and *N*,*N*,*N*-trimethylethanol ammonium (choline), or mixtures thereof.

Co-formulation ingredients include those products or ingredients that contain inorganic cations and may be selected from one or more of adjuvants, antifoam agents, antimicrobial agents, buffering agents, corrosion inhibitors, defoaming agents, deposition agents, dispersants, dyes, freezing point depressants, neutralizing agents, penetration aids, sequestering agents, spray drift control agents, spreading agents, stabilizers, sticking agents, suspension aids, viscosity-modifying additives, wetting agents, and the like.

The surface active compatibilizers described herein may be used to improve the spray tank compatibility of aqueous herbicide solutions containing a water soluble salt of an aryloxyalkanoic acid, a water soluble salt of a pyridyloxyalkanoic acid, a water soluble salt of an arylcarboxylic acid, a water soluble salt of a heteroarylcarboxylic acid, and/or a water soluble salt of glyphosate in spray tank mixtures, concentrates, or pre-mix concentrates. In aqueous spray tank mixtures, the surface active compatibilizer described herein may comprise, with respect to the aqueous herbicide spray solution of improved compatibility, from about 0.01 to about 5 weight percent, from about 0.01 to about 4 weight percent, from about 0.01 to about 3 weight percent, from about 0.01 to about 2 weight percent, from about 0.01 to about 1 weight percent, from about 0.05 to about 2 weight percent, from about 0.05 to about 1 weight percent, from about 0.05 to about 0.5 weight percent, from about 0.1 to about 0.4 weight percent, from about 0.15 to about 0.3 weight percent, or from about 0.15 to about 0.25 weight percent. In aqueous concentrates and aqueous pre-mix concentrates, the surface active compatibilizer described herein may comprise, with respect to the aqueous herbicide solution of improved compatibility, from about 0.05 to about 10 weight percent, from about 0.05 to about 8 weight percent, from about 0.05 to about 6 weight percent, from about 0.1 to about 5 weight percent, from about 0.2 to about 5 weight percent, from about 0.3 to about 5 weight percent, from about 0.4 to about 5 weight percent, from about 0.5 to about 5 weight percent, from about 0.5 to about 4 weight percent, from about 0.5 to about 3 weight percent, from about 1 to about 3 weight percent, or from about 1.5 to about 2.5 weight percent.

In some instances the surface active compatibilizers described herein can contain inorganic ions that could add to the concentration of inorganic ions already present in an aqueous herbicide solution as described herein and may cause incompatibility in such a solution. In such cases, the surface active compatibilizer chosen should be able to compatibilize such a solution containing an increased inorganic ion concentration after addition of the surface active compatibilizer. Alternatively, a surface active compatibilizer that does not contain inorganic cations such as, for example, a lignosulfonate where the sulfonic acid groups are in the acid or organo ammonium salt form or a surface active compatibilizer that does not contain chemical functional groups that can form salts can be used. Such surface active compatibilizers that do not contain inorganic cations may be particularly useful for improving the storage stability of aqueous herbicide concentrates and pre-mix concentrates in ambient and sub-ambient temperature conditions.

Without intending to be bound by theory, the surface active compatibilizers described herein are believed to improve the compatibility of aqueous herbicide solutions comprised of at least one of a water soluble salt of an aryloxyalkanoic acid, a water soluble salt of a pyridyloxyalkanoic acid, a water soluble salt of an arylcarboxylic acid, a water soluble salt of a heteroarylcarboxylic acid and a water soluble salt of glyphosate, a suitable concentration of one or more inorganic cations, and a pH of less than about 6.5 by preventing or inhibiting the crystallization or precipitation of solids. The relative effectiveness of the surface active compatibilizers in preventing the formation of these solids can be estimated by measuring the on-set pH of crystallization (OSPOC) of the solids in a titration analysis procedure. The OSPOC of a particular composition can be measured, for example, by titrating a solution of an aryloxyalkanoic or a pyridyloxyalkanoic acid salt of an inorganic cation such as, for example, the potassium salt of 2,4-D with a strong acid such as, for example, sulphuric acid until solids or crystals begin forming at a particular pH value (the OSPOC). The lower the OSPOC observed with the use of any particular surface active compatibilizer described herein, the better it may perform at preventing crystallization in, and therefore improving the compatibility of, an aqueous herbicide solution as described herein.

Alternatively, the relative effectiveness of the surface active compatibilizers described herein at improving the spray tank compatibility of the aqueous herbicide solutions described herein can be determined by measuring the Critical Crystallization Concentration (CCC) of the aryloxyalkanoic acid salt, the pyridyloxyalkanoic acid salt, the arylcarboxylic acid salt, or the heteroarylcarboxylic acid salt of an inorganic cation such as, for example, the potassium salt of 2,4-D in a tank mix solution. The CCC of a particular composition can be measured by preparing saturated and over saturated solutions or mixtures of the composition and then measuring the concentration of the particular herbicidal carboxylic acid remaining in solution. The higher the CCC observed with the use of a particular surface active compatibilizer, the better it may perform at preventing crystallization in, and therefore improving the spray tank compatibility of, the aqueous herbicide solutions described herein.

The aqueous herbicide solutions described herein that may be compatibilized using the surface active compatibilizers described herein include concentrates, pre-mix concentrates, and spray solutions prepared by diluting such a concentrate or pre-mix concentrate, or by tank mixing multiple components of a spray solution. The aqueous herbicide concentrate or pre-mix concentrate may comprise the use of, with respect to the total composition, from about 0.05 to 10 weight percent, from 0.05 to 8 weight percent, from 0.05 to 6 weight percent, from 0.1 to 5 weight percent, from 0.2 to 5 weight percent, from 0.3 to 5 weight percent, from 0.4 to 5 weight percent, from 0.5 to 5 weight percent, from 0.5 to 4 weight percent, from 0.5 to 3 weight percent, from 1 to 3 weight percent, or from 1.5 to 2.5 weight percent of one or more of the surface active compatibilizers described herein and from about 20 to about 60 weight percent on an acid equivalent basis of at least one of a water soluble salt of an aryloxyalkanoic acid (such as 2,4-D), a water soluble salt of a pyridyloxyalkanoic acid (such as triclopyr), a water soluble salt of an arylcarboxylic acid (such as dicamba), a water soluble salt of a heteroarylcarboxylic acid (such as aminopyralid) and a water soluble salt of glyphosate, or a pre-mix containing one or more of these salts. The aqueous herbicide concentrate or pre-mix concentrate of improved spray tank compatibility is preferably a solution containing the surface active compatibilizer dissolved or dispersed in the concentrate which upon dilution in water with products or solutions and at conditions that are normally prone to cause incompatibility as described herein, forms a herbicide spray solution of improved compatibility. The herbicide spray solution of improved spray tank compatibility may also be prepared by tank mixing the individual components of the spray solution at the point of use. Such a spray solution may also be combined with or diluted with products or solutions and at conditions that are normally prone to cause incompatibility, as described herein, to form a herbicide spray solution of improved compatibility.

Use of the surface active compatibilizers as described herein in aqueous spray solutions containing soluble salts of 2,4-D, soluble salts of glyphosate, and inorganic cations provides solutions of improved compatibility at pH levels below about 6.5. Additionally, improved compatibility can be provided below about pH 5.5. Further, improved compatibility can be provided below about pH 5.

A compatible aqueous spray solution containing the water soluble salts of glyphosate and 2,4-D can be prepared by adding the aqueous soluble concentrates of the salts of glyphosate and 2,4-D to an aqueous solution containing one or more of the described surface active compatibilizers. Other co-formulation ingredients such as water soluble or water dispersible ingredients including, but not limited to, dispersing agents, wetting agents, spray drift reduction agents, fertilizers, and antifoam agents, may optionally be added to the spray solution.

An example of improving the spray tank compatibility of a spray solution at a pH below about 6.5 containing water soluble salts of glyphosate and 2,4-D, and inorganic cations using the methods described herein includes:
a) preparing a solution in water containing, with respect to the final spray solution, from about 0.01 to about 5 weight per cent of a surface active compatibilizer, such as, for example, Polyfon^{®}O;
b) adding an aqueous concentrate of 2,4-D DMA to the solution prepared in a) to provide a solution comprising, with respect to the final spray solution, from about 0.3 to about 5 weight per cent of 2,4-D on an acid equivalent (ae) basis;
c) adding an aqueous concentrate of Roundup WeatherMax^{®} herbicide (an aqueous concentrate containing glyphosate potassium salt) (Monsanto, St.Louis, MO) to the solution prepared in b) to provide a solution comprising, with respect to the final spray solution, from about 0.3 to about 5 weight per cent of glyphosate on an acid equivalent (ae) basis where the final pH is less than about 6.5;
d) adding an aqueous solution of ammonium sulfate (AMS) to the solution prepared in c) to give a compatible solution comprising, with respect to the final spray solution, from about 1 to about 5 weight per cent of AMS; and
e) optionally, adding other inert co-formulation ingredients to the solution prepared in d).

In a further example, a compatibilized aqueous herbicide spray solution may be prepared by diluting one or more aqueous herbicide concentrates or by tank mixing the components of the spray solution. Such a spray solution may comprise, with respect to the total spray solution, from about 0.01 to about 5 weight percent, from about 0.05 to about 2 weight percent, or from about 0.05 to about 0.5 weight per cent of one or more surface active compatibilizers described herein, from about 0.3 to about 10 weight percent or from about 0.3 to about 5 weight percent each of a water soluble salt of 2,4-D, and a water soluble salt of glyphosate, and, optionally, any additional ingredients such as fertilizer.

In a further example, a compatibilized aqueous herbicide concentrate can contain one or more of the surface active compatibilizers described herein and a water soluble salt of 2,4-D or a water salt of glyphosate, or a pre-mix containing water soluble salts of 2,4-D and glyphosate. The concentrate may comprise, with respect to the total composition, from about 0.05 to about 10 weight percent, from about 0.1 to about 5 weight percent, or from about 0.5 to about 5 weight per cent of one or more surface active compatibilizers, and from about 20 to about 60 weight percent on an acid equivalent basis of at least one of a water soluble salt of 2,4-D and a water soluble salt of glyphosate. As described herein, a compatibilized aqueous herbicide concentrate is a solution containing the surface active compatibilizer dissolved or dispersed in the concentrate which upon dilution in water with products or solutions and at conditions that are normally prone to cause incompatibility, also as described herein, forms a herbicide spray solution of improved compatibility.

In a typical method for preparing the compatible aqueous herbicide concentrate described herein, the one or more surface active compatibilizers, the water soluble salt of at least one of 2,4-D and glyphosate, and, optionally, any additional ingredients, are mixed together in water to provide the aqueous concentrate. The order of addition of ingredients and the mixing conditions can be determined by one of ordinary skill in the art.

The methods and compositions described herein can be used for the control of undesired plant growth. In such a use, a herbicidally effective amount of the aqueous spray solution of improved compatibility is applied to an area of soil or targeted plant foliage to kill or provide suitable control of undesirable weed plants.

The effective amount of the active ingredients used in the methods and compositions described herein to be employed in a typical agricultural application often depends upon, for example, the type of plants, the stage of growth of the plants, the severity of environmental conditions, the weeds to be controlled and application conditions. Typically, a weed plant in need of control is contacted with an aqueous herbicidal spray solution that contains from about 0.01 to about 10 weight percent, preferably from about 0.1 to about 5 weight percent of a herbicide active ingredient on an acid equivalent basis with respect to the total aqueous spray solution. The contacting may be in any effective manner. For example, any exposed part of the plant, e.g., leaves or stems may be sprayed with the active ingredient as a solution in a carrier such as water.

The methods and compositions described herein are especially useful for the control of weeds in crops that are naturally tolerant to or have been made tolerant to or resistant to the herbicides contained in the spray solution by genetic manipulation or by mutation and selection. For example, corn, wheat, rice, soybean, sugar beet, cotton, canola, and other crops that have been made tolerant to or resistant to glyphosate and are naturally tolerant or resistant to or have been made genetically tolerant or resistant to 2,4-D can be treated. The aqueous herbicidal spray solutions of the present invention are also effective in controlling many weeds that have become resistant to glyphosate such as, for example, horseweed (*Conyza canadensis,* ERICA).

Optionally, the methods and compositions described herein may additionally contain one or more surfactants. The surfactants can be anionic, cationic or nonionic in character. Typical surfactants include salts of alkyl sulfates, such as diethanolammonium lauryl sulfate; alkylarylsulfonate salts, such as calcium dodecylbenzenesulfonate; alkyl and/or arylalkylphenol-alkylene oxide addition products, such as nonylphenol ethoxylate; alcohol-alkylene oxide addition products, such as tridecyl alcohol ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; ethoxylated amines, such as tallowamine ethoxylate; betaine surfactants, such as cocoamidopropyl betaine; polyethylene glycol esters of fatty acids, such as polyethylene glycol stearate; salts of mono and dialkyl phosphate esters; and mixtures thereof. The amounts and combinations of these surfactants to be used can easily be determined by one of ordinary skill in the art. As discussed above for surface active compatibilizers, it may be advantageous to avoid the use of surfactants that contain inorganic ions such as, for example, Na⁺, K⁺, or NH₄⁺, at a level that will impact crystallization in order to maintain the physical stability of the described compositions.

In addition to the specific methods and compositions set forth above, the methods and compositions described herein also may include compositions containing one or more additional compatible ingredients. These additional ingredients may include, for example, one or more pesticides or other ingredients, which may be dissolved or dispersed in the composition and may be selected from acaricides, algicides, antifeedants, avicides, bactericides, bird repellents, chemosterilants, defoliants, desiccants, disinfectants, fungicides, herbicide safeners, herbicides, insect attractants, insecticides, insect repellents, mammal repellents, mating disrupters, molluscicides, plant activators, modifiers of plant size and structure, rodenticides, semiochemicals, synergists, and virucides. Also, any other additional ingredients providing functional utility such as, for example, antifoam agents, antimicrobial agents, buffers, corrosion inhibitors, dispersing agents, dyes, fragrants, freezing point depressants, neutralizing agents, odorants, penetration aids, sequestering agents, spray drift control agents, spreading agents, stabilizers, sticking agents, viscosity-modifying additives, and the like, may be included in these compositions.

The following Examples are presented to illustrate various aspects of the compositions and methods described herein and should not be construed as limitations to the claims.

### Example 1 Reduction of the On-set pH of Crystallization (OSPOC) of an Aqueous Solution of 2,4-D Potassium With the Surface Active Compatibilizers (SAC) Described Herein

The on-set pH of crystallization (OSPOC; the pH of the solution when crystallization begins) of a 100 mL sample of an aqueous solution of a 3 weight percent (acid equivalent basis) of 2,4-D potassium (2,4-D K) with and without added SAC was determined as the pH was slowly lowered by the addition of 0.2 N aqueous sulfuric acid. As shown in Table 1, the addition of 0.2 weight percent of the SAC, with respect to total solution, to the aqueous solution of the 2,4-D K significantly reduced the OSPOC of the 2,4-D containing solutions when compared to the control example where no SAC was used.

**Table 1. Inhibition of 2,4-D Potassium Salt Crystallization from Aqueous Solutions at Low pH With Surface Active Compatibilizers (SAC) as Measured by the OSPOC**

| **2,4-D** K **Concentration % AE w/w** | **SAC Product**^{1,2} | **SAC Concentration % (w/w)** | **On-Set pH of Crystallization (OSPOC)** |
|---|---|---|---|
| 3% | control, no SAC | 0.0% | 6.16 |
| 3% | CE, Agrimer^{®} AL 10LC | 0.2% | 5.84 |
| 3% | CE, Agrimer^{®} VA 6 | 0.2% | 5.80 |
| 3% | CE, Agrimer^{®} VA 3 | 0.2% | 5.60 |
| 3% | CE, Agrimer^{®} 30 | 0.2% | 5.87 |
| 3% | CE, Agrimer^{®} ST | 0.2% | 5.87 |
| 3% | CE, Erkol^{®} 05/290 PVA | 0.2% | 5.75 |
| 3% | CE, Erkol M05/190 | 0.2% | 5.71 |
| 3% | Atlox™ 4913 | 0.2% | 5.41 |
| 3% | Atlox™ 4915 | 0.2% | 5.32 |
| 3% | Polyfon^{®} H | 0.2% | 4.94 |
| 3% | Polyfon^{®} O | 0.2% | 4.68 |
| 3% | Polyfon^{®} F | 0.2% | 5.21 |
| 3% | Polyfon^{®} T | 0.2% | 4.88 |
| 3% | KRAFTSPERSE^{®} DD-6 | 0.2% | 5.45 |
| 3% | REAX^{®} 85A | 0.2% | 5.07 |
| 3% | REAX^{®} 907 | 0.2% | 5.13 |
| 3% | REAX^{®} 910 | 0.2% | 5.28 |
| 3% | REAX^{®} 83A | 0.2% | 5.45 |
| 3% | CE, UCAR™ 162 Latex | 0.2% | 5.69 |
| 3% | CE, Tetronic^{®} 304 | 0.2% | 5.76 |
| 3% | CE, Pluronic^{®} F-68 | 0.2% | 5.66 |

¹Agrimer^{®} products are available from International Specialty Products, a division of Ashland (Wayne, NJ); Erkol^{®} products are available from Celanese (Dallas, TX); Atlox™ and Metasperse™ products are available from Croda Inc. (Edison, NJ); Polyfon^{®}, Kraftsperse^{®}, and REAX^{®} products are available from MeadWestvaco Corp. (Charleston, SC); UCAR™ 162 latex is available from Arkema, Inc. (King of Prussia, PA); Tetronic^{®}, and Pluronic^{®} products are available from BASF (Florham Park, NJ). ²CE: comparative example.

### Example 2 Determination of the Critical Crystallization Concentration (CCC) of Salts of 2,4-D in Aqueous Solutions of Glyphosate With Added Surface Active Compatibilizers (SAC)

The CCC of 2,4-D compositions were measured using the following method. Spray mixtures were prepared containing 2,4-D, glyphosate, inorganic ions, and a surface active compatibilizer at various over-saturated 2,4-D concentrations where crystallizations were observed. The crystals formed in each mixture were isolated, dried, and weighed. The amount/weight of the crystals isolated from each mixture were plotted versus the 2,4-D wt% AE concentration in the initial mixture to provide a linear function. The CCC was determined by measuring the X-intercept of the extrapolated linear function of the crystal weight vs. 2,4-D wt% AE concentration. For example, the following procedure was used to determine the CCC values exhibited in Table 2:
1. Add appropriate amounts of water of 342 ppm hardness and 2,4-D aqueous concentrate formulation, e.g. DMA salt, with or without built-in 1-2% w/w SAC in a 100ml centrifuge tube and mix until a homogeneous solution is achieved.
2. Add the SAC as a tank-mix additive if not included as a built-in ingredient in the 2,4-D aqueous concentrate in step 1.
3. Add an appropriate amount of glyphosate aqueous concentrate formulation, e.g. the glyphosate K salt found in Roundup PowerMax®, to the centrifuge tube and mix by inversion.
4. Optionally, add other tank mix ingredients such as ammonium sulfate (AMS) to the centrifuge tube.
5. Allow 24 hours for equilibration of the sample at ambient temperature before filtering, collecting, drying, and weighing the crystalline precipitates.
6. The amounts of 2,4-D and glyphosate salts were added to achieve desired AE concentrations of 2,4-D and glyphosate at 1:1 ratio, and the amount of water was calculated as a balance ingredient to achieve the final mixture volume of 100 ml.
7. Typically, a series of mixtures were prepared following the steps above at over-saturated concentrations, such as, 1.8%, 2.4%, and 3.0% on an acid equivalent (AE) basis of each herbicide salt. The weight of the crystalline precipitates collected was plotted against the corresponding AE concentration of 2,4-D in the mixture. The critical crystallization concentration (CCC) can then be determined as the maximum % 2,4-D AE concentration before crystallization occurs by extrapolating the linear function of crystal precipitate weight vs. 2,4-D % AE concentration to the horizontal axis where crystal precipitate weight becomes zero.

**Table 2. Determination of the Critical Crystallization Concentration (CCC) of Salts of 2,4-D in Aqueous Compositions Containing Salts of Glyphosate With Added Surface Active Compatibilizers (SAC)**

| **2,4-D Salt**¹ | **Glyphosate Salt**² | **SAC**³ | **2,4-D CCC %AE** |
|---|---|---|---|
| 2,4-D DMA | Roundup PowerMax^{®} | none, control sample | 0.89% |
| 2,4-D DMA | Roundup PowerMax^{®} | 1% Polyfon^{®} F, built-in | 1.16% |
| 2,4-D DMA | Roundup PowerMax^{®} | 2% Polyfon^{®} F, built-in | 1.26% |
| 2,4-D DMA | Roundup PowerMax^{®} | 1% Polyfon^{®} H, built-in | 1.46% |
| 2,4-D DMA | Roundup PowerMax^{®} | 2% Polyfon^{®} H, built-in | 1.66% |
| 2,4-D DMA | Roundup PowerMax^{®} | 0.145% Polyfon^{®} H, tank-mix | 1.60% |
| 2,4-D DMA | Roundup PowerMax^{®} | 0.12% Polyfon^{®} T, tank-mix | 1.72% |
| 2,4-D DMA | Roundup PowerMax^{®} | 0.07% Polyfon^{®} O, tank-mix | 1.62% |
| 2,4-D DMEA | Roundup PowerMax^{®} | none, control sample | 1.04% |
| 2,4-D DMEA | Roundup PowerMax^{®} | 0.1% Polyfon^{®} O, tank-mix | 1.77% |
| 2,4-D DMEA | Roundup **PowerMax^{®}** | 0.1% Polyfon^{®} H, tank-mix | 1.39% |

| | | | |
|---|---|---|---|
| ¹2,4-D salts used were unsequestered dimethyl ammonium salts supplied as DMA^{®}-4 (an aqueous concentrate containing 456 g ae/L of 2,4-D dimethyl ammonium salt) or DMA^{®}-6 (an aqueous concentrate containing 678 g ae/L of 2,4-D dimethyl ammonium salt), both available from Dow AgroSciences LLC, Indianapolis, IN; and 2,4-D DMEA (aqueous concentrate containing 456 g ae/L of 2,4-D dimethylethanol ammonium salt). ²Roundup PowerMax^{®} is an aqueous concentrate containing 540 g ae/L of glyphosate potassium salt (Monsanto Company, St. Louis, MO). ³Polyfon^{®} products are available from MeadWestvaco Corp. (Charleston, SC). | | | |

### Example 3 Preparation of a Compatible Aqueous Concentrate of 2,4-D Choline Salt Containing a Surface Active Compatibilizer (SAC) and Dilution of it in Spray Solutions Containing Glyphosate Salts and Ammonium Sulfate (AMS)

A typical procedure for preparing the spray solutions shown in Table 3 involved the following steps:
1. Add an appropriate amount of water of 342 ppm hardness into a 100 ml centrifuge tube, and then add an appropriate amount of a 2,4-D aqueous concentrate formulation, e.g. 2,4-D choline salt, and mix until a homogeneous solution is achieved.
2. The SAC was incorporated into the above spray mixture either from 2,4-D concentrate formulation with built-in SAC, or by direct addition of the SAC or its concentrate solution into the mixture.
3. Add appropriate amount of glyphosate aqueous concentrate formulation, e.g. glyphosate K salt, to the centrifuge tube and mix by inversion.
4. Optionally, add other tank mix ingredients such as AMS to the centrifuge tube.
5. The amounts of 2,4-D and glyphosate salts were added to achieve the desired AE concentrations of 2,4-D and glyphosate at a 1:1 weight ratio, and the amount of water was calculated as a balance ingredient to achieve the final mixture volume of 100 ml. For example, 15 gal/ac, 10 gal/ac, and 5 gal/ac spray volumes for an 840 gae/ha use rate would be corresponding to about 0.6%, 0.9%, and 1.8% AE of 2,4-D and glyphosate in the tank mixtures, respectively.
6. The spray solutions thus prepared were examined after 24 hours of equilibration at ambient temperature for the presence of any crystals or precipitates

**Table 3. Compatibility Evaluations of Spray Solutions Prepared by Mixing a 456 g ae/l Aqueous Concentrate of 2,4-D Dimethyl Ammonium Salt with a 540 g ae/l Aqueous Concentrate of Glyphosate Potassium Salt at Various Conditions With or Without the Presence of a SAC**

| 2,4-D Salt¹ | Glyphosate Salt² | SAC³ | SAC Conc. | Crystallization at Various Spray Volumes | | |
|---|---|---|---|---|---|---|
| | | | | 15 gal/ac | 10 gal/ac | 5 gal/ac |
| DMA-4 | Roundup PowerMax^{®} | none | none | no | trace | lots of crystals |
| DMA-4 | Roundup PowerMax^{®} | Polyfon^{®} O | 0.07% tank-mix | no | no | trace |
| DMA-4 | Roundup PowerMax^{®} | Polyfon^{®} H | 0.145% tank-mix | no | no | trace |
| DMA-4 | Roundup PowerMax^{®} | Polyfon^{®} T | 0.12% tank- mix | no | no | trace |
| DMA-4 | Roundup PowerMax^{®} | Polyfon^{®} H | 2% built-in | no | no | trace |
| DMA-4 | Roundup PowerMax^{®} | Polyfon^{®} F | 2% built-in | no | no | some |

| | | | | | | |
|---|---|---|---|---|---|---|
| ¹2,4-D salts used were unsequestered dimethyl ammonium salts supplied as DMA^{®}-4 (an aqueous concentrate containing 456 g ae/L of 2,4-D dimethyl ammonium salt) available from Dow AgroSciences LLC (Indianapolis, IN). ²Roundup PowerMax^{®} is an aqueous concentrate containing 540 g ae/L of glyphosate potassium salt available from Monsanto Company (St. Louis, MO). ³Polyfon^{®} products are available from MeadWestvaco Corp. (Charleston, SC). | | | | | | |

The term comprising and variations thereof as used herein is used synonymously with the term including and variations thereof and are open, non-limiting terms.

## Claims

1. A method of improving the spray tank compatibility of an aqueous herbicide solution by suppressing the formation of solids or phase separations, the aqueous herbicide solution including a water soluble salt of an aryloxyalkanoic acid, a water soluble salt of a pyridyloxyalkanoic acid, a water soluble salt of an arylcarboxylic acid, and/or a water soluble salt of a heteroarylcarboxylic acid, comprising adding to the aqueous herbicide solution one or more surface active compatibilizers, wherein the surface active compatibilizer is a polyacrylate or a polymethacrylate grafted with polyethylene oxide side chains, a polymeric amphoteric dispersant, a sulfonated lignin including one or more cations selected from hydrogen, ammonium, sodium and calcium, or mixtures thereof, or mixtures thereof.

2. The method of claim 1 wherein the aryloxyalkanoic acid is 2,4-D, 2,4-DB, dichlorprop, mecoprop, MCPA, or MCPB, the pyridyloxyalkanoic acid is triclopyr or fluroxypyr, the arylcarboxylic acid is dicamba and/or the heteroarylcarboxylic acid is aminopyralid, clopyralid, or picloram.

3. The method of claim 1 or 2, wherein the aqueous herbicide solution further includes glyphosate.

4. The method of any one of claims 1-3, further comprising one or more inorganic cations selected from the group consisting of NH₄⁺, Na⁺, K⁺, Ca²⁺, Mg²⁺, Fe²⁺, Fe³⁺, Cu²⁺, Mn²⁺, and Zn²⁺, or one or more organo ammonium cations selected from the group consisting of monomethyl ammonium, isopropyl ammonium, butyl ammonium, dimethyl ammonium, diethyl ammonium, triethyl ammonium, monoethanol ammonium, diethanol ammonium, dimethylethyl ammonium, diethylethanol ammonium, triethanol ammonium, triisopropanol ammonium, tetramethyl ammonium, tetraethyl ammonium, and *N,N,N-*trimethylethanol ammonium (choline), or mixtures thereof.

5. The method of any one of claims 1-4, wherein the aqueous herbicide solution is a concentrate or a pre-mix concentrate, wherein the aqueous herbicide concentrate or pre-mix concentrate comprises, with respect to the total composition, from 0.05 to 10 weight percent of the one or more of the surface active compatibilizers and from 20 to 60 weight percent on an acid equivalent basis of at least one of the water soluble salt of an aryloxyalkanoic acid, the water soluble salt of a pyridyloxyalkanoic acid, the water soluble salt of an arylcarboxylic acid, the water soluble salt of a heteroarylcarboxylic acid and the water soluble salt of glyphosate, wherein the aqueous herbicide solution preferably is a concentrate containing water soluble salts of 2,4-D and/or glyphosate.

6. The method of any one of claims 1-4, wherein the aqueous herbicide solution is a spray solution.

7. The method of claim 1, wherein the surface active compatibilizer is in the form of an acid or in the form of a salt, wherein said salt preferably is an organic amine salt or a salt containing inorganic cations, wherein said organic amine salt more preferably comprises a cation selected from monomethyl ammonium, isopropyl ammonium, butyl ammonium, dimethyl ammonium, diethyl ammonium, triethyl ammonium, monoethanol ammonium, diethanol ammonium, dimethylethyl ammonium, diethylethanol ammonium, triethanol ammonium, triisopropanol ammonium, tetramethyl ammonium, tetraethyl ammonium, and *N,N,N-*trimethylethanol ammonium (choline), or mixtures thereof, wherein, if the surface active compatibilizer is a sulfonated lignin, said sulfonated lignin includes one or more cations selected from hydrogen, ammonium, sodium and calcium or mixtures thereof.

8. An aqueous herbicide solution of improved spray tank compatibility including a water soluble salt of an aryloxyalkanoic acid, a water soluble salt of a pyridyloxyalkanoic acid, a water soluble salt of an arylcarboxylic acid, and/or a water soluble salt of a heteroarylcarboxylic acid, one or more surface active compatibilizers and optionally glyphosate, wherein the surface active compatibilizer is a polyacrylate or a polymethacrylate grafted with polyethylene oxide side chains, a polymeric amphoteric dispersant, a sulfonated lignin including one or more cations selected from hydrogen, ammonium, sodium and calcium or mixture thereof, or mixtures thereof, wherein the aqueous herbicide solution is a concentrate or a pre-mix concentrate comprising, with respect to the total composition, from 1.5 to 2.5 weight percent of the one or more of the surface active compatibilizers and from 20 to 60 weight percent on an acid equivalent basis of at least one of the water soluble salt of an aryloxyalkanoic acid, the water soluble salt of a pyridyloxyalkanoic acid, the water soluble salt of an arylcarboxylic acid, the water soluble salt of a heteroarylcarboxylic acid and the water soluble salt of glyphosate.

9. The aqueous herbicide solution of claim 8 wherein the aryloxyalkanoic acid is 2,4-D, 2,4-DB, dichlorprop, mecoprop, MCPA, or MCPB, the pyridyloxyalkanoic acid is triclopyr or fluroxypyr, the arylcarboxylic acid is dicamba and/or the heteroarylcarboxylic acid is aminopyralid, clopyralid, or picloram.

10. The aqueous herbicide solution of claim 8 or 9, further comprising one or more inorganic cations selected from the group consisting of NH₄⁺, Na⁺, K⁺, Ca²⁺, Mg²⁺, Fe²⁺, Fe³⁺, Cu²⁺, Mn²⁺, and Zn²⁺, or one or more organo ammonium cations selected from the group consisting of monomethyl ammonium, isopropyl ammonium, butyl ammonium, dimethyl ammonium, diethyl ammonium, triethyl ammonium, monoethanol ammonium, diethanol ammonium, dimethylethyl ammonium, diethylethanol ammonium, triethanol ammonium, triisopropanol ammonium, tetramethyl ammonium, tetraethyl ammonium, and *N,N,N-*trimethylethanol ammonium (choline), or mixtures thereof.

11. The aqueous herbicide solution of any one of claims 8-10, wherein the aqueous herbicide solution is a concentrate containing water soluble salts of 2,4-D and/or glyphosate.

## Patentansprüche

1. Ein Verfahren zur Verbesserung der Spritzbehälterkompatibilität einer wässrigen Herbizidlösung durch Unterdrückung der Bildung von Feststoffen oder Phasentrennungen, wobei die wässrige Herbizidlösung ein wasserlösliches Salz einer Aryloxyalkansäure, ein wasserlösliches Salz einer Pyridyloxyalkansäure, ein wasserlösliches Salz einer Arylcarbonsäure und/oder ein wasserlösliches Salz einer Heteroarylcarbonsäure enthält, umfassend die Zugabe von einem oder mehreren oberflächenaktiven Kompatibilisierungsmitteln zu der wässrigen Herbizidlösung, wobei das oberflächenaktive Kompatibilisierungsmittel ein Polyacrylat oder ein Polymethacrylat, gepfropft mit Polyethylenoxidseitenketten, ein polymeres, amphoteres Dispergiermittel, ein sulfoniertes Lignin enthaltend ein oder mehrere Kationen, die aus Wasserstoff, Ammonium, Natrium und Calcium oder Mischungen davon ausgewählt sind, oder Gemische davon, ist.

2. Das Verfahren gemäß Anspruch 1, wobei die Aryloxyalkansäure 2,4-D, 2,4-DB, Dichlorprop, Mecoprop, MCPA oder MCPB ist, die Pyridyloxyalkansäure Triclopyr oder Fluroxypyr ist, die Arylcarbonsäure Dicamba ist und/oder die Heterarylcarbonsäure Aminopyralid, Clopyralid oder Picloram ist.

3. Das Verfahren gemäß Anspruch 1 oder 2, wobei die wässrige Herbizidlösung des Weiteren Glyphosat enthält.

4. Das Verfahren gemäß irgendeinem der Ansprüche 1 bis 3, des Weiteren umfassend ein oder mehrere anorganische Kationen, die aus der Gruppe bestehend aus NH₄⁺, Na⁺, K⁺, Ca²⁺, Mg²⁺, Fe²⁺, Fe³⁺, Cu²⁺, Mn²⁺ und Zn²⁺ ausgewählt sind, oder ein oder mehrere Organoammoniumkationen, die aus der Gruppe bestehend aus Monomethylammonium, Isopropylammonium, Butylammonium, Dimethylammonium, Diethylammonium, Triethylammonium, Monoethanolammonium, Diethanolammonium, Dimethylethylammonium, Diethylethanolammonium, Triethanolammonium, Triisopropanolammonium, Tetramethylammonium, Tetraethylammonium und *N,N,N-*Trimethylethanolammonium (Cholin) ausgewählt sind, oder Gemische davon.

5. Das Verfahren gemäß irgendeinem der Ansprüche 1 bis 4, wobei die wässrige Herbizidlösung ein Konzentrat oder ein vorgemischtes Konzentrat ist, wobei das wässrige Herbizidkonzentrat oder vorgemischte Konzentrat, bezogen auf die Gesamtzusammensetzung, von 0,05 bis 10 Gew.-% des einen oder der mehreren oberflächenaktiven Kompatibilisierungsmittel und von 20 bis 60 Gew.-% auf einer Säureäquivalentbasis mindestens eines von dem wasserlöslichen Salz einer Aryloxyalkansäure, dem wasserlöslichen Salz einer Pyridyloxyalkansäure, dem wasserlöslichen Salz einer Arylcarbonsäure, dem wasserlöslichen Salz einer Heteroarylcarbonsäure und dem wasserlöslichen Salz von Glyphosat enthält, wobei die wässrige Herbizidlösung vorzugsweise ein Konzentrat enthaltend wasserlösliche Salze von 2,4-D und/oder Glyphosat ist.

6. Das Verfahren gemäß irgendeinem der Ansprüche 1 bis 4, wobei die wässrige Herbizidlösung eine Sprühlösung ist.

7. Das Verfahren gemäß Anspruch 1, wobei das oberflächenaktive Kompatibilisierungsmittel in Form einer Säure oder in Form eines Salzes vorliegt, wobei das Salz bevorzugt ein organisches Aminsalz oder ein anorganische Kationen enthaltendes Salz ist, wobei das organische Aminsalz bevorzugter ein Kation enthält, das aus Monomethylammonium, Isopropylammonium, Butylammonium, Dimethylammonium, Diethylammonium, Triethylammonium, Monoethanolammonium, Diethanolammonium, Dimethylethylammonium, Diethylethanolammonium, Triethanolammonium, Triisopropanol-ammonium, Tetramethylammonium, Tetraethylammonium und *N,N,N-*Trimethylethanolammonium (Cholin) oder Gemischen davon ausgewählt ist, wobei, wenn das oberflächenaktive Kompatibilisierungsmittel ein sulfoniertes Lignin ist, das sulfonierte Lignin ein oder mehrere Kationen enthält, die aus Wasserstoff, Ammonium, Natrium und Calcium oder Mischungen davon ausgewählt sind.

8. Eine wässrige Herbizidlösung mit verbesserter Spritzbehälterkompatibilität, die ein wasserlösliches Salz einer Aryloxyalkansäure, ein wasserlösliches Salz einer Pyridyloxyalkansäure, ein wasserlösliches Salz einer Arylcarbonsäure und/oder ein wasserlösliches Salz einer Heteroarylcarbonsäure, ein oder mehrere oberflächenaktive Kompatibilisierungsmittel und wahlweise Glyphosat enthält, wobei das oberflächenaktive Kompatibilisierungsmittel ein Polyacrylat oder ein Polymethacrylat, gepfropft mit Polyethylenoxidseitenketten, ein polymeres amphoteres Dispergiermittel, ein sulfoniertes Lignin, welches ein oder mehrere Kationen ausgewählt aus Wasserstoff, Ammonium, Natrium und Calcium oder Mischungen davon enthält, oder Mischungen davon ist, wobei die wässrige Herbizidlösung ein Konzentrat oder ein vorgemischtes Konzentrat umfassend, bezogen auf die Gesamtzusammensetzung, von 1,5 bis 2,5 Gew.-% des einen oder der mehreren oberflächenaktiven Kompatibilisierungsmittel und von 20 bis 60 Gew.-% auf einer Säureäquivalentbasis von mindestens einem von dem wasserlöslichen Salz einer Aryloxyalkansäure, dem wasserlöslichen Salz einer Pyridyloxyalkansäure, dem wasserlöslichen Salz einer Arylcarbonsäure, dem wasserlöslichen Salz einer Heteroarylcarbonsäure und dem wasserlöslichen Salz von Glyphosat ist.

9. Die wässrige Herbizidlösung gemäß Anspruch 8, wobei die Aryloxyalkansäure 2,4-D, 2,4-DB, Dichlorprop, Mecoprop, MCPA oder MCPB ist, die Pyridyloxyalkansäure Triclopyr oder Fluroxypyr ist, die Arylcarbonsäure Dicamba ist und/oder die Heterarylcarbonsäure Aminopyralid, Clopyralid oder Picloram ist.

10. Die wässrige Herbizidlösung gemäß Anspruch 8 oder 9, des Weiteren umfassend ein oder mehrere anorganische Kationen, die aus der Gruppe bestehend aus NH₄⁺, Na⁺, K⁺, Ca²⁺, Mg²⁺, Fe²⁺, Fe³⁺, Cu²⁺, Mn²⁺ und Zn²⁺ ausgewählt sind, oder ein oder mehrere Organoammoniumkationen, die aus der Gruppe bestehend aus Monomethylammonium, Isopropylammonium, Butylammonium, Dimethylammonium, Diethylammonium, Triethylammonium, Monoethanolammonium, Diethanolammonium, Dimethylethylammonium, Diethylethanolammonium, Triethanolammonium, Triisopropanolammonium, Tetramethylammonium, Tetraethylammonium und *N,N,N-*Trimethylethanolammonium (Cholin) ausgewählt sind, oder Gemische davon.

11. Die wässrige Herbizidlösung gemäß irgendeinem der Ansprüche 8 bis 10, wobei die wässrige Herbizidlösung ein Konzentrat enthaltend wasserlösliche Salze von 2,4-D und/oder Glyphosat ist.

## Revendications

1. Procédé pour améliorer la compatibilité en cuve à pulvérisation d'une solution aqueuse d'herbicide en empêchant la formation de solides ou des séparations de phases, laquelle solution aqueuse d'herbicide contient un sel hydrosoluble d'un acide aryloxy-alcanoïque, un sel hydrosoluble d'un acide pyridyloxy-alcanoïque, un sel hydrosoluble d'un acide aryl-carboxylique, et/ou un sel hydrosoluble d'un acide hétéroaryl-carboxylique, lequel procédé comporte le fait d'ajouter à la solution aqueuse d'herbicide un ou plusieurs agent(s) tensioactif(s) de compatibilisation, et lequel agent tensioactif de compatibilisation est un polyacrylate ou polyméthacrylate sur lequel sont greffées des chaînes latérales de poly(oxyde d'éthylène), un dispersant polymère amphotère, un lignine-sulfonate comportant un ou plusieurs cation(s) choisi(s) parmi le cation ammonium et ceux d'hydrogène, de sodium et de calcium et leurs mélanges, ou un mélange de tels composés.

2. Procédé conforme à la revendication 1, dans lequel l'acide aryloxy-alcanoïque est du 2,4-D, du 2,4-DB, du dichlorprop, du mécoprop, du MCPA ou du MCPB, l'acide pyridyloxy-alcanoïque est du triclopyr ou du fluroxypyr, l'acide aryl-carboxylique est du dicamba, et/ou l'acide hétéroaryl-carboxylique est de l'aminopyralide, du clopyralid ou du piclorame.

3. Procédé conforme à la revendication 1 ou 2, dans lequel la solution aqueuse d'herbicide contient en outre du glyphosate.

4. Procédé conforme à l'une des revendications 1 à 3, dans lequel ladite solution comprend en outre un ou plusieurs cation(s) inorganique(s) choisi(s) dans l'ensemble formé par les suivants : NH₄⁺, Na⁺, K⁺, Ca²⁺, Mg²⁺, Fe²⁺, Fe³⁺, Cu²₊ Mn²⁺ et Zn²⁺, ou un ou plusieurs cation(s) de type organo-ammonium, choisi(s) dans l'ensemble formé par les suivants : monométhyl-ammonium, isopropyl-ammonium, butyl-ammonium, diméthyl-ammonium, diéthyl-ammonium, triéthyl-ammonium, monoéthanol-ammonium, diéthanol-ammonium, diméthyl-éthyl-ammonium, diéthyl-éthanol-ammonium, triéthanol-ammonium, triisopropanol-ammonium, tétraméthyl-ammonium, tétraéthyl-ammonium, et N,N,N-triméthyl-éthanol-ammonium (choline), et leurs mélanges.

5. Procédé conforme à l'une des revendications 1 à 4, dans lequel la solution aqueuse d'herbicide est un concentré ou un concentré pré-mix, lequel concentré ou concentré pré-mix herbicide aqueux comprend, par rapport à la composition totale, de 0,05 à 10 % en poids d'un ou plusieurs agents tensioactifs de compatibilisation, et de 20 à 60 % en poids, en équivalent d'acide, d'au moins l'un du sel hydrosoluble d'acide aryloxy-alcanoïque, du sel hydrosoluble d'acide pyridyloxy-alcanoïque, du sel hydrosoluble d'acide aryl-carboxylique, du sel hydrosoluble d'acide hétéroaryl-carboxylique, et du sel hydrosoluble de glyphosate, et dans lequel procédé la solution aqueuse d'herbicide est de préférence un concentré contenant des sels hydrosolubles de 2,4-D et/ou de glyphosate.

6. Procédé conforme à l'une des revendications 1 à 4, dans lequel la solution aqueuse d'herbicide est une solution à pulvériser.

7. Procédé conforme à la revendication 1, dans lequel l'agent tensioactif de compatibilisation se présente sous la forme d'un acide ou sous la forme d'un sel, lequel sel est de préférence un sel d'amine organique ou un sel contenant des cations inorganiques, et lequel sel d'amine organique, mieux encore, comprend un cation choisi parmi les suivants : monométhyl-ammonium, isopropyl-ammonium, butyl-ammonium, diméthyl-ammonium, diéthyl-ammonium, triéthyl-ammonium, monoéthanol-ammonium, diéthanol-ammonium, diméthyl-éthyl-ammonium, diéthyl-éthanol-ammonium, triéthanol-ammonium, triisopropanol-ammonium, tétraméthyl-ammonium, tétraéthyl-ammonium, et N,N,N-triméthyl-éthanol-ammonium (choline), et leurs mélanges, étant entendu que, si l'agent tensioactif de compatibilisation est un lignine-sulfonate, ce lignine-sulfonate comporte un ou plusieurs cation(s) choisi(s) parmi le cation ammonium et ceux d'hydrogène, de sodium et de calcium et leurs mélanges.

8. Solution aqueuse d'herbicide offrant, en cuve à pulvérisation, une compatibilité améliorée, contenant un sel hydrosoluble d'un acide aryloxy-alcanoïque, un sel hydrosoluble d'un acide pyridyloxy-alcanoïque, un sel hydrosoluble d'un acide aryl-carboxylique, et/ou un sel hydrosoluble d'un acide hétéroaryl-carboxylique, un ou plusieurs agent(s) tensioactif(s) de compatibilisation, et en option, du glyphosate, dans laquelle l'agent tensio-actif de compatibilisation est un polyacrylate ou polyméthacrylate sur lequel sont greffées des chaînes latérales de poly(oxyde d'éthylène), un dispersant polymère amphotère, un lignine-sulfonate comportant un ou plusieurs cation(s) choisi(s) parmi le cation ammonium et ceux d'hydrogène, de sodium et de calcium et leurs mélanges, ou un mélange de tels composés, et laquelle solution aqueuse d'herbicide est un concentré ou un concentré pré-mix comprenant, par rapport à la composition totale, de 1,5 à 2,5 % en poids d'un ou plusieurs agents tensioactifs de compatibilisation et de 20 à 60 % en poids, en équivalent d'acide, d'au moins l'un du sel hydrosoluble d'acide aryloxy-alcanoïque, du sel hydrosoluble d'acide pyridyloxy-alcanoïque, du sel hydrosoluble d'acide aryl-carboxylique, du sel hydrosoluble d'acide hétéroaryl-carboxylique, et du sel hydrosoluble de glyphosate.

9. Solution aqueuse d'herbicide, conforme à la revendication 8, dans laquelle l'acide aryloxy-alcanoïque est du 2,4-D, du 2,4-DB, du dichlorprop, du mécoprop, du MCPA ou du MCPB, l'acide pyridyloxy-alcanoïque est du triclopyr ou du fluroxypyr, l'acide aryl-carboxylique est du dicamba, et/ou l'acide hétéroaryl-carboxylique est de l'amino-pyralide, du clopyralid ou du piclorame.

10. Solution aqueuse d'herbicide, conforme à la revendication 8 ou 9, comprenant en outre un ou plusieurs cation(s) inorganique(s) choisi(s) dans l'ensemble formé par les suivants : NH₄⁺, Na⁺, K⁺, Ca²⁺, Mg²⁺, Fe²⁺, Fe³⁺, Cu²⁺ Mn²⁺ et Zn²⁺, ou un ou plusieurs cation(s) de type organo-ammonium, choisi(s) dans l'ensemble formé par les suivants : monométhyl-ammonium, isopropyl-ammonium, butyl-ammonium, diméthyl-ammonium, diéthyl-ammonium, triéthyl-ammonium, monoéthanol-ammonium, diéthanol-ammonium, diméthyl-éthyl-ammonium, diéthyl-éthanol-ammonium, triéthanol-ammonium, triisopropanol-ammonium, tétraméthyl-ammonium, tétraéthyl-ammonium, et N,N,N-triméthyl-éthanol-ammonium (choline), et leurs mélanges.

11. Solution aqueuse d'herbicide, conforme à l'une des revendications 8 à 10, laquelle solution aqueuse d'herbicide est de préférence un concentré contenant des sels hydrosolubles de 2,4-D et/ou de glyphosate.
